# EUROPÄISCHE PATENTANMELDUNG

(11) **EP 4 431 464 A1**
(43) Veröffentlichungstag der Anmeldung: **18.09.2024**
(21) Anmeldenummer: 24158944.9
(22) Anmeldetag: 21.02.2024
(51) Int. Cl.: C02F 1/00, C02F 1/42, F24D 19/00

(54) **ARMATURENANORDNUNG ZUR WASSERBEHANDLUNG VON WASSER FÜR HEIZKREISLÄUFE**

(30) Priorität: 13.03.2023 DE 202023101192 U
(71) Anmelder: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(57) **Zusammenfassung**

Eine Armaturenanordnung zur Wasserbehandlung von Wasser für Heizkreisläufe, enthaltend eine Heizungsarmatur zum Einbau in eine Rohrleitung zwischen Wasserversorgung und Heizkreislauf, mit Anschlüssen zum Anschließen eines Behälters mit einem Wasserbehandlungsmittel; einen Behälter mit einem Behältereinlass und einem Behälterauslass und Ionentauschergranulat oder einem anderen Wasserbehandlungsmittel im Strömungsweg zwischen Behältereinlass und Behälterauslass; Sensoren und/oder Messeinrichtungen zum Ermitteln des Erschöpfungsgrads und/oder anderer Zustandsparameter des in dem Behälter befindlichen Wasserbehandlungsmittels; und eine Steuer- und Auswerteeinrichtung zum Erfassen des Zustands des in dem Behälter befindlichen Wasserbehandlungsmittels und Erzeugen eines Alarm- und/oder Steuersignals, wenn das Wasserbehandlungsmittel erschöpft ist; dadurch gekennzeichnet, dass die Heizungsarmatur und der Behälter über einen oder mehrere Schläuche miteinander verbunden sind; und die Steuer- und Auswerteeinrichtung an dem Behälter vorgesehen ist.

## Beschreibung

### Technisches Gebiet

Die Erfindung betrifft eine Armaturenanordnung zur Wasserbehandlung von Wasser für Heizkreisläufe, enthaltend
(a) eine Heizungsarmatur zum Einbau in eine Rohrleitung zwischen Wasserversorgung und Heizkreislauf, mit Anschlüssen zum Anschließen eines Behälters mit einem Wasserbehandlungsmittel;
(b) einen Behälter mit einem Behältereinlass und einem Behälterauslass und Ionentauschergranulat oder einem anderen Wasserbehandlungsmittel im Strömungsweg zwischen Behältereinlass und Behälterauslass;
(c) Sensoren und/oder Messeinrichtungen zum Ermitteln des Erschöpfungsgrads und/oder anderer Zustandsparameter des in dem Behälter befindlichen Wasserbehandlungsmittels; und
(d) eine Steuer- und Auswerteeinrichtung zum Erfassen des Zustands des in dem Behälter befindlichen Wasserbehandlungsmittels und Erzeugen eines Alarm- und/oder Steuersignals, wenn das Wasserbehandlungsmittel erschöpft ist.

Derartige Armaturenanordnungen sind bekannt. Mit Öffnen eines Absperrhahns, kann ein Heizkreislauf gefüllt und nachgefüllt werden. Wenn der Druck im Heizkreislauf absinkt, öffnet der Absperrhahn eine Verbindung zur Wasserversorgung und Wasser fließt in den Heizkrei slauf.

Systemtrenneranordnung stellt sicher, dass kein Wasser aus dem Heizkreislauf zurück in die Wasserversorgung fließen kann. Bei einem defekten Rückflussverhinderer und einem Abfall des Eingangsdrucks öffnet ein Ablaufventil und Wasser fließt nach außen ab. Mit einem Druckminderer wird der Fülldruck geregelt. Die Heizungsarmaturen werden gewöhnlich einzeln in der Rohrleitung installiert.

Zur Sicherung der Wasserqualität kann eine Wasserbehandlung durchgeführt werden. Beispielsweise kann das Wasser durch ein Ionentauschergranulat geleitet werden, in dem Calcium entzogen sind, so dass ein Verkalken des Heizkreislaufs vermieden wird.

### Stand der Technik

Unter der Bezeichnung "Füllkombi" vertreibt die Anmelderin Heizungsarmaturen zum Füllen von Heizkreisläufen. Unter der Bezeichnung "Heizungscenter" vertreibt die Anmelderin Kombinationsarmaturen, bei denen ein Systemtrenner und ein Filter in separaten Gehäusen hintereinander angeordnet sind. Ein Systemtrenner ist beispielsweise in DE 20 2015 100 340 U1 beschrieben.

DE 20 2009 000 084 U1 offenbart einen rückspülbaren Filter. Das Filtermaterial sitzt in einer Filtertasse. Das Heizungswasser fließt kontinuierlich durch den Filter. Dadurch bleiben Partikel im Filtermaterial hängen. Wenn ein Kugelhahn am Ablauf geöffnet wird, dreht sich die Strömungsrichtung im Filter um und Wasser fließt in umgekehrter Richtung durch das Filtermaterial nach außen ab. Dabei werden Schmutzpartikel mitgenommen.

EP 1 431 466 A2 offenbart eine als Ganzes montierbare Baugruppe aus Armaturen und Geräten zur Wasserversorgung. Die einzelnen Armaturen sind in eigenen Gehäuseteilen untergebracht.

DE 20 2009 001 957 U1 offenbart eine modulare Anordnung, bei welcher Rohrtrenner, Wasserenthärtungsanordnungen, Filter und Druckminderer als Module hintereinander mit Flanschverbindungen zu einer Armaturenanordnung zusammengesetzt werden können. Jedes Modul umfasst ein eigenes Gehäuse. Der Montageaufwand ist vergleichsweise hoch.

DE 10 2013 102 460 A1 offenbart eine Armaturenanordnung zum Füllen und Nachfüllen von Heizkreisläufen mit Wasser, enthaltend einen von einem Motor angetriebenen Absperrhahn, einen Filter, eine Sytemtrenneranordnung, einen Druckminderer, und einen Drucksensor. Ein Steuergerät ist mit den Signalen des Drucksensors beaufschlagt und öffnet den Absperrhahn bei einem Druckabfall.

DE 20 2010 008 759 U1 offenbart ein Armaturenteil, welches zwischen zwei Armaturenteilen installierbar ist und mit welchem die Wasserströmung durch ein Wasserbehandlungsgerät leitbar ist.

Die Füllkombinationen haben eine große Vielzahl von Funktionalitäten sind vergleichsweise teuer.

### Offenbarung der Erfindung

Es ist Aufgabe der Erfindung, eine Anordnung der eingangs genannten Art zu schaffen, mit welcher bestehende Heizungssysteme mit Armaturen zum Füllen und Nachfüllen von Heizkreisläufen und Heizungsarmaturen anderer Hersteller ohne großen Aufwand mit einer Wasserbehandlungseinrichtung versehen werden können.

Erfindungsgemäß wird die Aufgabe dadurch gelöst, dass
(e) die Heizungsarmatur und der Behälter über einen oder mehrere Schläuche miteinander verbunden sind; und
(f) die Steuer- und Auswerteeinrichtung an dem Behälter vorgesehen ist.

Auf diese Weise kann der normalerweise schwere und voluminöse Behälter an quasi beliebiger Stelle auf dem Boden aufgestellt werden. Die Position des Behälters kann unabhängig von der Einbaulage der Heizungsarmaturen gewählt werden. Die Steuer- und Auswerteeinrichtung am Behälter ermöglicht den Betrieb des Behälters unabhängig von der in der Rohrleitung installierten Heizungsarmatur. Der Behälter kann mit Heizungsarmaturen unterschiedlicher Hersteller, modulare Heizungsarmaturen und Kombinationsheizungsarmaturen mit einer Vielzahl von Funktionaliäten eingesetzt werden.

Die Steuer- und Ausewerteeinrichtung bestimmt beispielsweise, wann der Austausch von Verbrauchsmaterialien, etwa eines Ionentauschers erforderlich ist. Dies kann beispielsweise in regelmäßigen Zeitabständen erfolgen. Es kann aber auch ein Messwert verwendet werden. Eine besonders einfache Ausgestaltung der Erfindung sieht vor, dass die Sensoren und/oder Messeinrichtungen einen Leitfähigkeitssensor im Behälterauslass umfassen. Die Leitfähigkeit ist ein Hinweis auf den Kalkgehalt im Wasser. Ein hoher Kalkgehalt bewirkt eine hohe Leitfähigkeit. Bei einem starken Anstieg der Leitfähigkeit erzeugt die Steuer- und Auswerteeinrichtung ein Signal, welches einen Hinweis an den Betreiber gibt, dass das Ionentauschermaterial ausgetauscht werden muss.

Die Sensoren und/oder Messeinrichtungen können ferner einen Drucksensor umfassen, der den Druck im Behältereinlass umfasst.

Bei einer besonders einfachen Ausgestaltung der Erfindung ist vorgesehen, dass die Heizungsarmatur ein Armaturengehäuse mit einer Absperrung umfasst, welches stromabwärts zu einem davon getrennten Systemtrenner in einer Rohrleitung installierbar ist. Diese Ausgestaltung ist insbesondere dann sinnvoll, wenn Systemtrenner und andere Funktionalitäten egal welchen Herstellers bereits vorhanden sind und das Heizungssystem lediglich mit einer Wasserbehandlung nachgerüstet werden soll.

Alternativ kann vorgesehen sein, dass die Heizungsarmatur ein Armaturengehäuse umfasst, in dem eine oder mehrere der folgenden Funktionalitäten verwirklicht sind: einlassseitige Absperrung; auslassseitige Absperrung; Systemtrenner, Druckminderer; einlassseitiges Manometer; auslassseitiges Manometer; Doppelmanometer für Eingangs- und Ausgangsdruck; Sieb; Filter; Rückspülfilter. Derartige Kombinationsarmaturen sind aus dem Stand der Technik bereits bekannt und weisen den zusätzlichen Schlauchanschluss für den Behälter auf.

Bei einer besonders vorteilhaften Ausgestaltung umfasst die Heizungsarmatur eine motorbetriebene, einlasseitige Absperrung, welche von einer Absperrsteuerung steuerbar ist. Eine solche Absperrung ermöglicht den automatischen Betrieb und öffnet beispielsweise bei einem Druckabfall im Heizkreislauf, so dass dieser nachgefüllt werden kann. Er schließt, sobald der Sollwert erreicht wird.

Es können Kommunikationseinrichtungen für die Kommunikation zwischen Absperrsteuerung und Steuer- und Auswerteeinrichtung an dem Behälter vorgesehen sein. Die Kommunikation kann über ein Kabel oder kabellos etwa über WLAN, Bluetooth, Nearfield oder eine Infrarotschnittstelle erfolgen. Eine Kommunikation zwischen der Absperrsteuerung und der Steuer- und Auswerteeinrichtung an dem Behälter ermöglicht beispielsweise, dass Signale nur über eines der Geräte an einen Betreiber weitergegeben werden.

Bei einer besonders bevorzugten Ausgestaltung der Erfindung umfassen die Sensoren und/oder Messeinrichtungen eine Turbine oder einen anderen Strömungsmesser, der die durch den Behälter fließende Strömung erfasst. Der Strömungsmesser ermöglicht die Erfassung des Volumens des behandelten Wassers. So kann beispielsweise aus der Eingangshärte und dem Volumen ermittelt werden, wann ein Ionentauschergranulat erschöpft ist und rechtzeitig ein Signal abgeben.

Mit einem Strömungsmesser kann aber zusätzlich Leckageschutz betrieben werden, wenn eine einlassseitige Absperrung vorgesehen ist, welche von einer mit den Signalen des Strömungsmessers beaufschlagten Steuer- und Auswerteeinrichtung steuerbar ist. Für diese Funktionalität muss lediglich eine geeignete Software in der Steuer- und Auswerteeinrichtung an dem Behälter oder in der Absperrsteuerung vorgesehen sein, welche die Strömungsverhältnisse ermittelt und die Absperrung bei Leckage oder unerwünschten Strömungsverhältnissen schließt.

Eine besonders einfache Ausgestaltung der Erfindung sieht vor, dass die Schläuche, über welche die Heizungsarmatur mit dem Behälter verbunden sind, von einem Doppelschlauch gebildet sind, bei welche einer der Schläuche innerhalb eines anderen Schlauchs geführt ist. Dies vereinfacht die Montage und vermeidet, dass die Schläuche bei der Installation verwechselt werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.Wikipedia.de, www.wissen.de oder der Wettbewerber, forschenden Institute, Universitäten und Verbände, beispielsweise DVGW, dargelegt sind. Insbesondere haben die verwendeten Begriffe nicht die gegenteilige Bedeutung dessen, was der Fachmann den obigen Publikationen entnimmt.

### Kurze Beschreibung der Zeichnungen

- Fig.1: ist eine perspektivische Ansicht einer Heizungsarmatur mit einer Vielzahl von Funktionalitäten zum Füllen und Nachfüllen eines Heizkreislaufs mit Gehäuse.
- Fig.2: zeigt die Heizungsarmatur aus Figur 1 ohne Verkleidung.
- Fig.3: ist ein Vertikalschnitt durch die Heizungsarmatur aus Figur 1.
- Fig.4: ist eine Seitenansicht der Heizungsarmatur aus Figur 1.
- Fig.5: ist ein Horizontalschnitt durch die Heizungsarmatur aus Figur 1.
- Fig.6: ist ein Vertikalschnitt durch eine einfache Heizungsarmatur mit einem Schauchanschluss für einen Behälter zur Wasserbehandlung und einem Absperrhahn.
- Fig.7: ist eine perspektivische Darstellung der Heizungsarmartur aus Figur 6.
- Fig.8: ist eine Draufsicht auf die Heizungsarmatur aus Figur 6.
- Fig.9: ist eine Seitenansicht der Heizungsarmatur aus Figur 6.
- Fig.10: ist eine perspektivische Ansicht auf den oberen Teil eines Behälters zur Wasserbehandlung mit Steuer- und Auswerteeinrichtung und Gehäuse.
- Fig.11: ist eine Seitenansicht der Anordnung aus Figur 10 ohne Steuer- und Auswerteeinrichtung und ohne Verkleidung.
- Fig.12: ist eine perspektivische Ansicht der Anordnung aus Figur 11.
- Fig.13: ist ein Vertikalschnitt durch die Anordnung aus Figur 11.
- Fig.14: ist ein Horizontalschnitt durch die Anordnung aus Figur 11.
- Fig.15: zeigt die Anordnung aus Figur 1, bei der der einlassseitige Absperrhahn mit einem Motor und einer Motorsteuerung versehen ist.

### Beschreibung der Ausführungsbeispiele

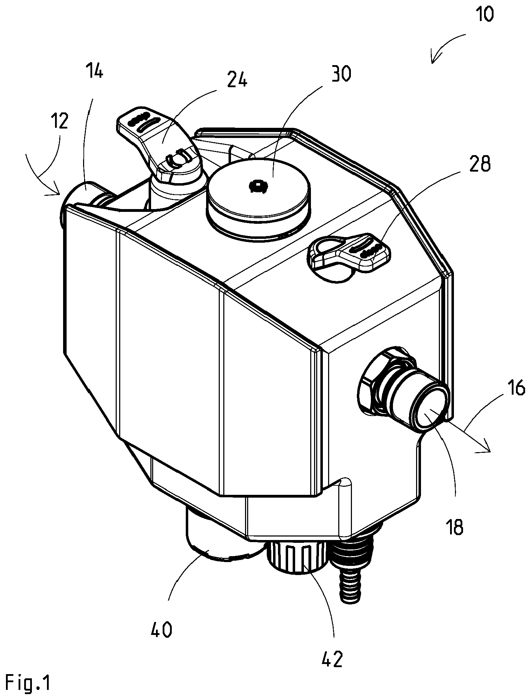

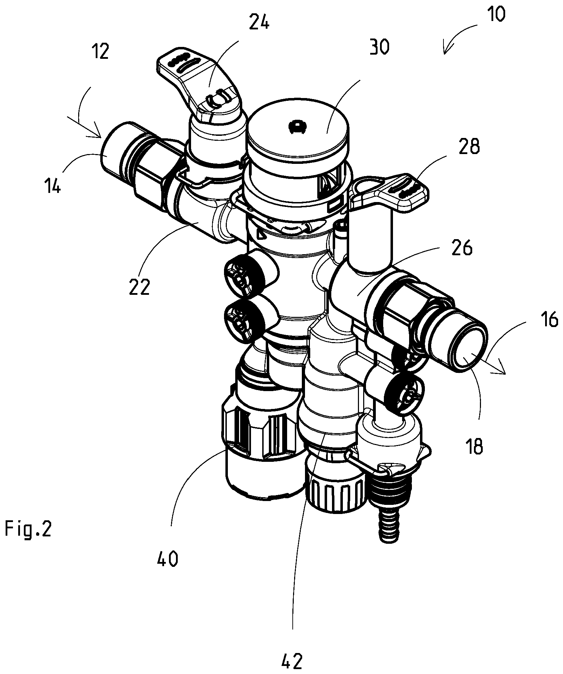

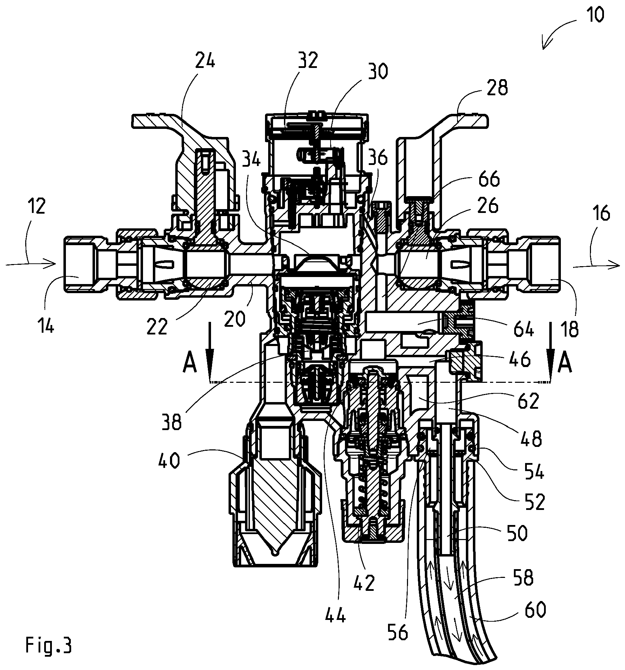

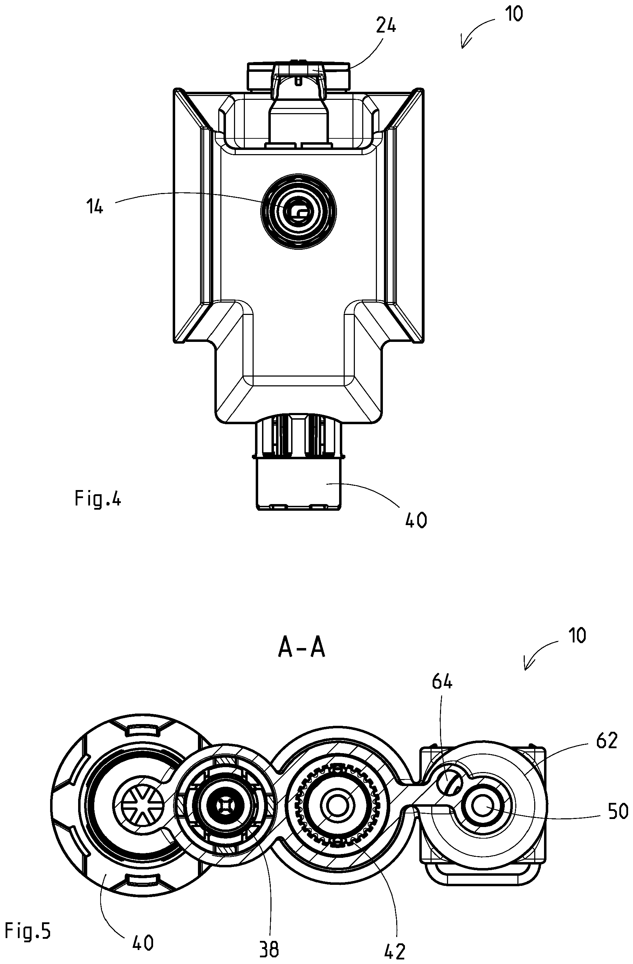

Figur 1 bis 5 und 15 zeigen eine allgemein mit 10 bezeichnete Heizungsarmatur zum Füllen und Nachfüllen eines Heizkreislaufs. Die Heizungsarmatur 10 wird in einer Rohrleitung (nicht dargestellt) zwischen Wasserversorgung und Heizkreislauf installiert. Das Wasser fließt von der Wasserversorgung in Richtung des Pfeils 12 an einem Einlass 14 in die Heizungsarmatur 10 hinein und in Richtung des Pfeils 16 aus einem Auslass 18 wieder aus der Heizungsarmatur 10 heraus. Im vorliegenden Ausführungsbeispiel sind Einlass 14 und Auslass 18 koaxial angeordnet.

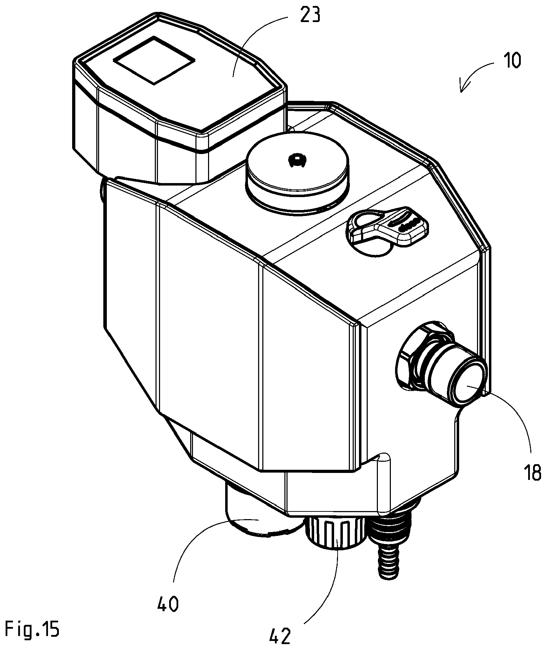

Im vorliegenden Ausführungsbeispiel umfasst die Heizungsarmatur 10 ein Armaturengehäuse 20, in welchem verschiedene Funktionalitäten verwirklicht sind. Hinter dem Einlass ist eine einlassseitige Absperrung in Form eines handbetätigten Kugelhahns 22 im Strömungsweg angeordnet. Statt eines Handgriffs 24 zur Betätigung des Kugelhahns 22 kann auch ein Motor mit einer Absperrautomatik 23 verwendet werden. Dies ist in Figur 15 illustriert. Vor dem Auslass 18 ist eine auslassseitige Absperrung in Form eines handbetätigten Kugelhahns 26 mit Griff 28 im Strömungsweg angeordnet. Die Kugelhähne 22 und 26 sind ebenfalls auf der Rohrachse angeordnet.

Zwischen Kugelhahn 22 und Kugelhahn 26 ist ein Doppelmanometer 30 vorgesehen. Das Doppelmanometer 30 ist von oben in einen Gehäusestutzen des Gehäuses 20 eingesteckt. Das Doppelmanometer 30 erfasst einerseits den Eingangsdruck hinter dem einlassseitigen Kugelhahn 22 und andererseits über einen Kanal 36 den auslassseitigen Ausgangsdruck vor dem Kugelhahn 26. Eingangs- und Ausgangsdruck und/oder deren Differenz wird auf einer gemeinsamen Skala 32 angezeigt, die von oben einsehbar ist.

Für eine kompakte Baulänge der Anordnung ist die Wasserströmung im vorliegenden Ausführungsbeispiel nicht geradlinig auf der Rohrachse geführt, sondern führt unterhalb des Doppelmanometers 30 nach unten durch ein Sieb 34. Unterhalb des Siebs 34 ist stromabwärts ein gesetzlich vorgeschriebener Systemtrenner 38 mit zwei Rückflussverhinderern und einem Ablauf 40 angeordnet. Die Strömungsrichtung durch den Systemtrenner 38 erfolgt von oben nach unten in der Darstellung, d.h. senkrecht zur Rohrachse. Der Systemtrenner 38 stellt sicher, dass bei einem eingangsseitigen Druckabfall kein Wasser aus dem Heizungssystem zurück in die Wasserversorgung fließen kann, selbst wenn einer oder beide Rückflussverhinderer kaputt sind. Zurückfließendes Wasser wird über den Ablauf 40 nach außen abgeleitet. Derartige Systemtrenner sind bekannt und brauchen daher nicht weiter beschrieben werden.

Seitlich - in der Darstellung rechts - neben dem Systemtrenner 38 ist ein Druckminderer 42 im Strömungsweg angeordnet. Mit dem Druckminderer 42 kann der Ausgangsdruck auf einen gewünschten Wert eingestellt werden. Druckminderer sind bekannt und brauchen daher hier nicht weiter beschrieben werden.

Das durch das Druckmindererventil 44 des Druckminderers 42 strömende Wasser fließt durch einen lateralen Kanal 46 seitlich und durch einen senkrechten Kanal 48 nach unten zu einem inneren Auslasskanal 50 eines Schlauchanschlusses 52. Der Schlauchanschluss 52 ist in einen Stutzen 54 eingesteckt. Der Schlauchanschluss 52 bildet den inneren Auslasskanal 50 und einen koaxial darum herum verlaufenden Einlasskanal 56. Auf den Schlauchanschluss 52 kann ein Doppelschlauch mit einem inneren Schlauch 58, der in einem äußeren Schlauch 60 geführt ist aufgesteckt werden. Das Wasser strömt dann im inneren Schlauch 58 in Richtung der Pfeile zu einem nachstehend näher erläuterten Wasserbehandlungsbehälter und im äußeren Schlauch 60 in dem so gebildeten Ringraum in Richtung der Pfeile zurück zum Schlauchanschluss der Heizungsarmatur 10.

Die Heizungsarmatur 10 kann auch ohne Wasserbehandlung verwendet werden. Dann wird statt eines Schlauchanschlusses 52 ein Stopfen auf den Stutzen 54 aufgesteckt. Das im Ringkanal im äußeren Schlauch 60 zurückfließende, behandelte Wasser gelangt in einen Ringkanal 62. Von dort fließt es über Kanäle 62, 64 und 66 zum Auslass 18. Dort steht es zum Füllen und Nachfüllen eines Heizkreislaufs zur Verfügung.

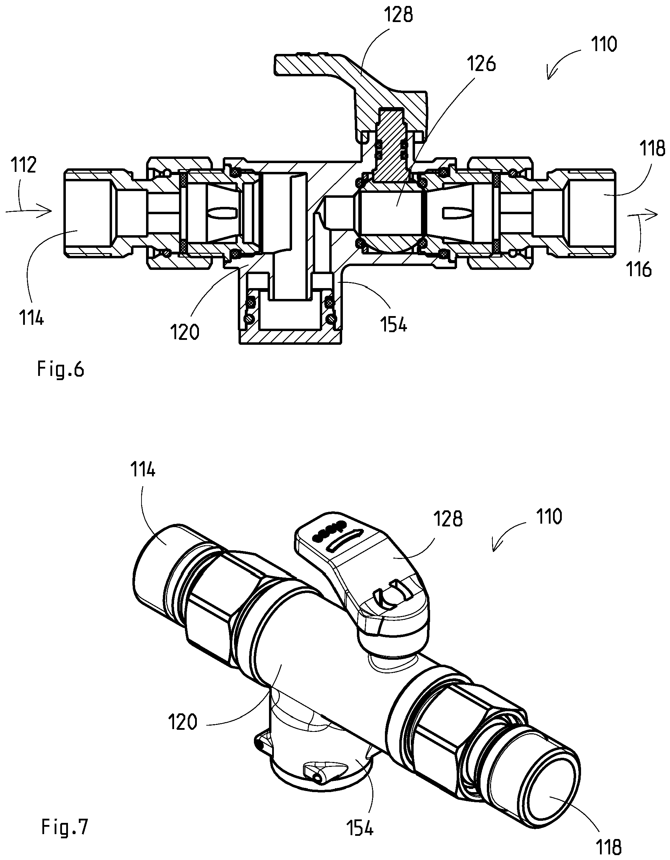

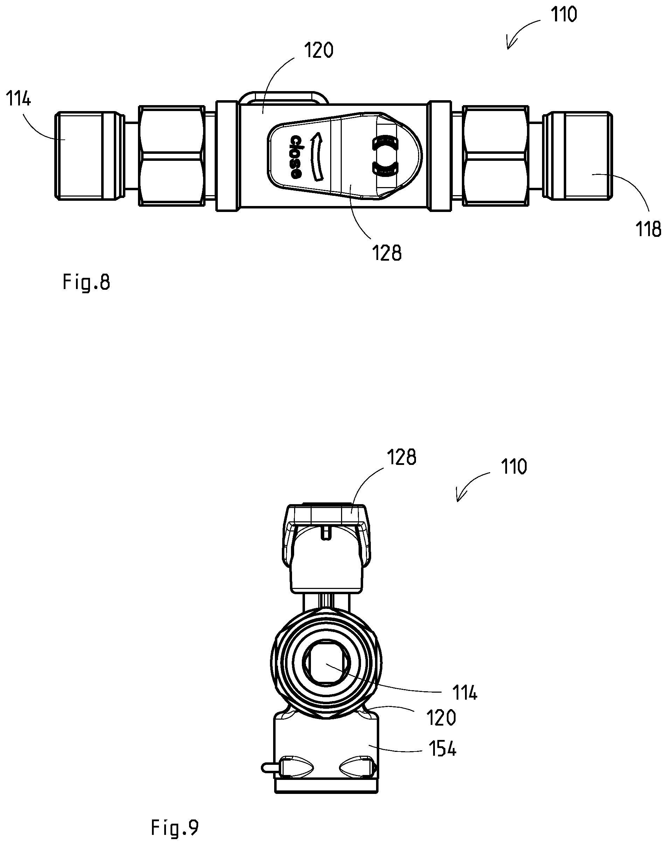

Es gibt von der Anmelderin und von anderen Herstellern Heizungsarmaturen mit allen beschriebenen, und weiteren Funktionalitäten - etwa Filter und Dosiereinrichtungen. Es ist nicht erforderlich, eine solche aufwändige Heizungsarmatur 10 zum Anschließen eines Wasserbehandlungsbehälters zu verwenden, um beispielsweise bestehende Heizungsarmaturen zu ersetzen. Bei solchen Anwendungen kann eine einfache Heizungsarmatur 110 verwendet werden, die in den Figuren 6 bis 9 dargestellt ist.

Die Heizungsarmatur 110 besteht im Wesentlichen aus einem rohrförmigen Armaturengehäuse 120 mit einem Einlass 114 und einem Auslass 118. Wasser fließt in Richtung des Pfeils 112 am Einlass 114 in die Heizungsarmatur 110 hinein und in Richtung des Pfeils 116 am dazu koaxialen Auslass 118 aus der Heizungsarmatur hinaus.

Das Armaturengehäuse 120 bildet stromabwärts zum Einlass 114 einen Gehäusestutzen 154. Der Gehäusestutzen 154 ist in der Darstellung mit einem Stopfen 156 verschlossen. Zum Anschließen einer Wasserbehandlungseinrichtung kann der Stopfen 156 entfernt und ein Schlauchanschluss eingesteckt werden, der identisch zum Schlauchanschluss 52 des ersten Ausführungsbeispiels aus Fig. 1 bis 5 ist. Es kann also ohne großen Aufwand ein Doppelschlauch angeschlossen werden. Dies ist auch bei solchen Heizungssystemen sinnvoll, bei denen nur selten Wasser ein- oder nachgefüllt wird und die Wasserbehandlungseinrichtung nicht dauerhaft angeschlossen ist. Eine Absperrung in Form eines Kugelhahns 126 mit Griff 128 ist zwischen Gehäusestutzen 154 und Auslass 118 vorgesehen.

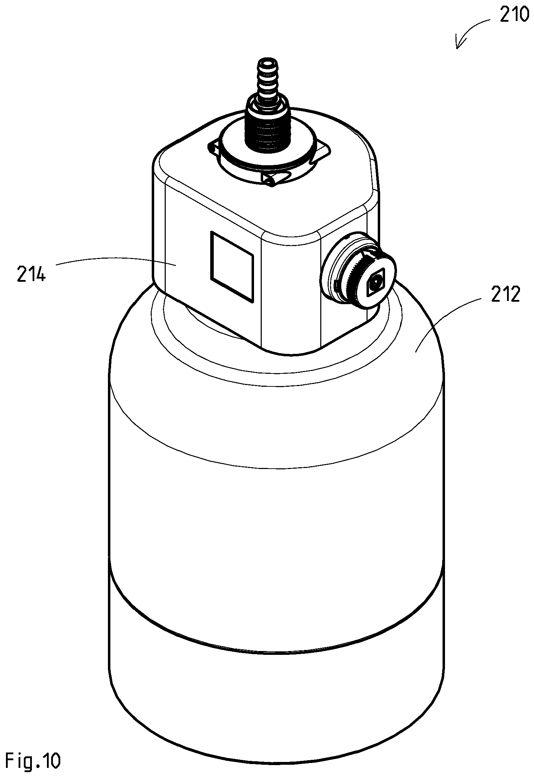

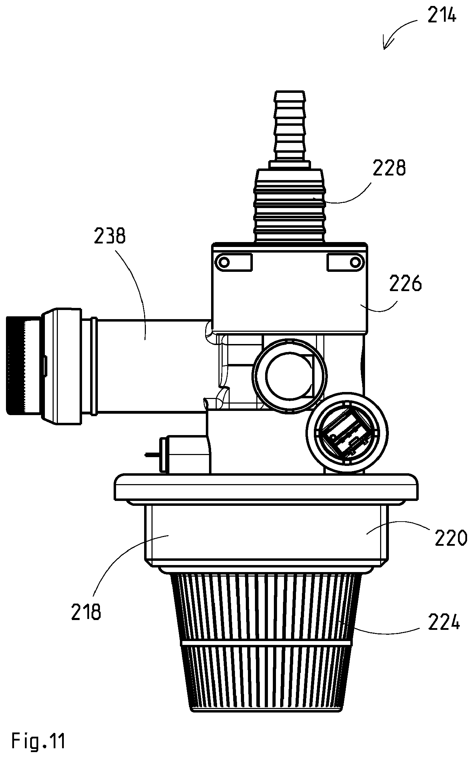

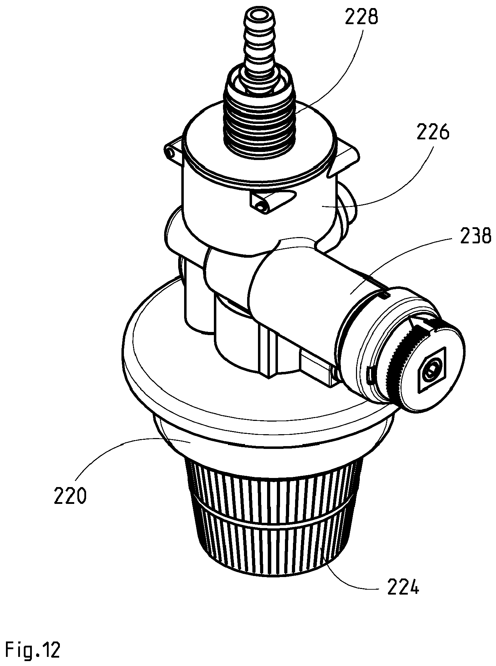

Figur 10 bis Figur 14 zeigen einen Behälter 210 zur Wasserbehandlung. Der untere Teil 212 des Behälters ist mit Ionentauschergranulat befüllt, wie es aus dem Stand der Technik bereits bekannt ist. Der untere Teil 212 hat oben eine Öffnung, in welche der Behälterkopf 214 eingesteckt ist. Figur 10 zeigt den Behälterkopf 214 mit einer Steuer- und Auswerteeinrichtung in einer Verkleidung. Figuren 11 bis 14 zeigen den Behälterkopf 214 des Behälters 210 ohne Steuer- und Auswerteeinrichtung und ohne Verkleidung.

Der Behälterkopf 214 umfasst ein allgemein mit 216 bezeichnetes Gehäuse. Das Gehäuse 216 weist einen nach unten ragenden Gewindestutzen 218 mit einem Außengewinde 220 und einer Dichtung 222 auf. Mit dem Gewindestutzen 218 wird der Behälterkopf 214 in den unteren Teil 212 des Behälters eingeschraubt. Ein Sieb 224 erstreckt sich bis in den unteren Teil 212 des Behälters 210 und verhindert, dass Ionentauschergranulat oder andere Partikel in den Behälterkopf 214 gelangen.

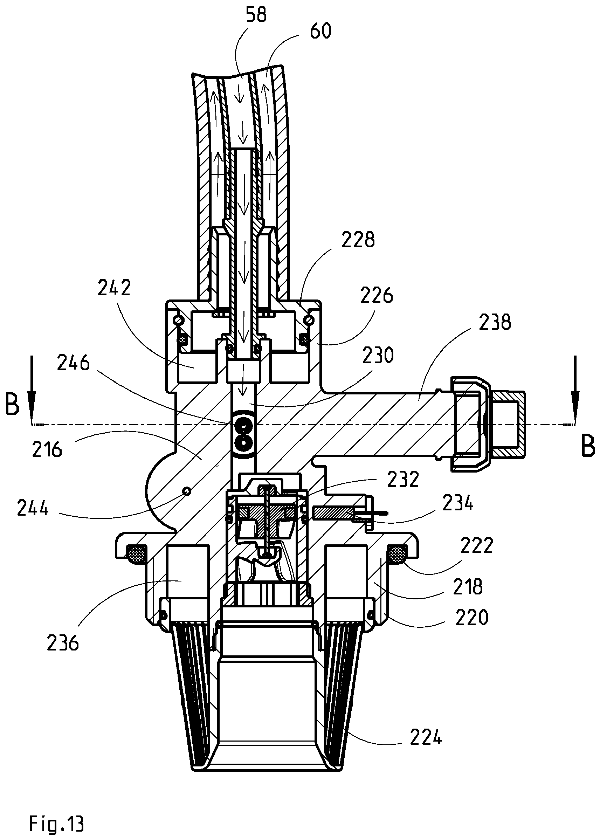

Am oberen Ende weist das Gehäuse 216 einen weiteren Stutzen 226 auf. In den Stutzen ist ein Schlauchanschluss 228 eingesteckt. Der Schlauchanschluss 228 ist für den Anschluss eines Doppelschlauchs ausgebildet, ähnlich wie der Schlauchanschluss 52 am anderen Ende des Doppelschlauchs. Es versteht sich, dass auch zwei Schläuche statt eines Doppelschlauchs verwendet werden können. Dann ist der Anschluss etwas anders ausgebildet. Wasser fließt über den inneren Schlauch 58 durch den Schlauchanschluss 228 in einen senkrechten Kanal 230 innerhalb des Gehäuses. Dies ist in Figur 13 gut zu erkennen. Im Strömungsweg ist eine Turbine 232 mit einem Reed-Kontakt 234 als Strömungsmesser angeordnet. Das Signal des Reed-Kontakts 234 wird an die in Figur 10 gezeigte Steuer- und Auswerteeinrichtung übertragen. Dort wird ermittelt, wieviel Strömungsvolumen durch die Anordnung fließt. Zusammen mit der Menge an Ionentauschergranulat und der Wasserhärte des Rohwassers wird der Erschöpfungsgrad des Ionentauschergranulats ermittelt. Bei drohender Erschöpfung wird ein Signal erzeugt, welches den Nutzer oder die Nutzerin entsprechend informiert. Es versteht sich, dass die Notifikation als akustisches oder optisches Alarmsignal und/oder nachrichtlich beispielsweise per Email oder SMS etc. erfolgen kann.

Die Strömungsmessung ermöglicht ferner die Leckagedetektion. Bei unerwünschten Strömungszuständen, die beispielsweise auf Mikroleckage oder Rohrbruch im Heizkreislauf hinweisen, kann ein Signal an die Motorsteuerung 23 übertragen werden. Diese schließt dann die Absperrung 22, so dass die Menge des austretenden Wassers durch das Leck begrenzt ist.

Die Strömung wird mittig von der Turbine in den unteren Teil 212 des Behälters 210 geleitet. Dort erfolgt die Wasserbehandlung. Im vorliegenden Fall erfolgt die Wasserbehandlung durch ein Ionentauschergranulat im unteren Teil 212 des Behälters. Das behandelte Wasser passiert das Sieb 224 und gelangt in einen Ringkanal 236 im Gehäuse 216.

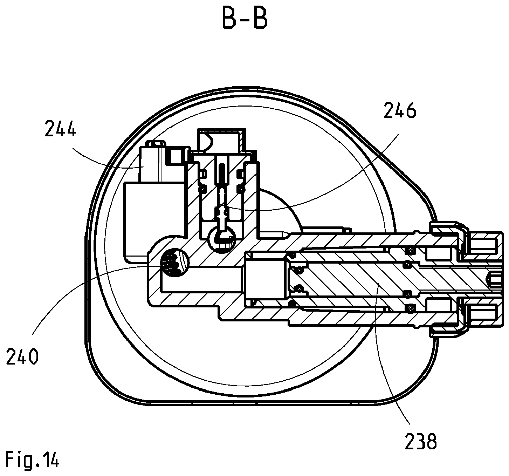

Eine Verschneideeinrichtung 238 ermöglicht die Einstellung der Wasserhärte des austretenden Wassers. Die Verschneideeinrichtung 238 ist in Figur 14 gut zu erkennen. Über eine Verbindung 240 zwischen Einlasskanal 230 und Auslass-Ringkanal 242 wird dem behandelten Wasser Rohwasser beigemischt. Auf diese Weise erfolgt keine vollständige Enthärtung, sondern - wenn gewünscht - lediglich eine Teilenthärtung.

Ein Drucksensor 244 ermittelt den Druck und ein Leitfähigkeitssensor 246 die Leitfähigkeit des verschnittenen Wassers. Die Signale werden an die Steuer- und Auswerteeinrichtung (Fig.10) übertragen. Da die Steuer- und Auswerteeinrichtung direkt an der Wasserbehandlung vorgesehen ist, kann der Behälter 210 mit quasi jeder Heizungsbefüllarmatur und unabhängig davon eingesetzt werden. Besonders vorteilhaft ist, es, dass die Funktionalität "Wasserbehandlung" quasi an jeder Stelle der Rohrleitung zwischen Systemtrenner und Heizkreislauf installiert werden kann. Dies ist besonders vorteilhaft, wenn die räumlichen Verhältnisse einen Behälter mit Ionentauschergranulat oder dergleichen nicht unmittelbar unterhalb oder an einer Füllkombination erlauben.

Der Behälter 210 mit dem Behälterkopf 214 kann an eine Heizungsarmatur 10 mit vielfältigen Funktionalitäten oder mit einer sehr einfach ausgestalteten Heizungsarmatur 110 verwendet werden. Dazu wird der Doppelschlauch einmal an der Heizungsarmatur 10 bzw.110 und mit dem anderen Ende am Behälterkopf 214 installiert.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Armaturenanordnung zur Wasserbehandlung von Wasser für Heizkreisläufe, enthaltend
(a) eine Heizungsarmatur zum Einbau in eine Rohrleitung zwischen Wasserversorgung und Heizkreislauf, mit Anschlüssen zum Anschließen eines Behälters mit einem Wasserbehandlungsmittel;
(b) einen Behälter mit einem Behältereinlass und einem Behälterauslass und Ionentauschergranulat oder einem anderen Wasserbehandlungsmittel im Strömungsweg zwischen Behältereinlass und Behälterauslass;
(c) Sensoren und/oder Messeinrichtungen zum Ermitteln des Erschöpfungsgrads und/oder anderer Zustandsparameter des in dem Behälter befindlichen Wasserbehandlungsmittels; und
(d) eine Steuer- und Auswerteeinrichtung zum Erfassen des Zustands des in dem Behälter befindlichen Wasserbehandlungsmittels und Erzeugen eines Alarm- und/oder Steuersignals, wenn das Wasserbehandlungsmittel erschöpft ist;
**dadurch gekennzeichnet, dass**
(e) die Heizungsarmatur und der Behälter über einen oder mehrere Schläuche miteinander verbunden sind; und
(f) die Steuer- und Auswerteeinrichtung an dem Behälter vorgesehen ist.

2. Armaturenanordnung nach Anspruch 1, **dadurch gekennzeichnet, dass** die Sensoren und/oder Messeinrichtungen einen Leitfähigkeitssensor im Behälterauslass umfassen.

3. Armaturenanordnung nach einem der vorgehenden Ansprüche, **dadurch gekennzeichnet, dass** die Sensoren und/oder Messeinrichtungen einen Drucksensor umfassen, der den Druck im Behältereinlass umfasst.

4. Armaturenanordnung nach einem der vorgehenden Ansprüche, **dadurch gekennzeichnet, dass** die Heizungsarmatur ein Armaturengehäuse mit einer Absperrung umfasst, welches stromabwärts zu einem davon getrennten Systemtrenner in einer Rohrleitung installierbar ist.

5. Armaturenanordnung nach einem der Ansprüche 1 bis 3, **dadurch gekennzeichnet, dass** die Heizungsarmatur ein Armaturengehäuse umfasst, in dem eine oder mehrere der folgenden Funktionalitäten verwirklicht sind: einlassseitige Absperrung; auslassseitige Absperrung; Systemtrenner, Druckminderer; einlassseitiges Manometer; auslassseitiges Manometer; Doppelmanometer für Eingangs- und Ausgangsdruck; Sieb; Filter; Rückspülfilter.

6. Armaturenanordnung nach Anspruch 5, **dadurch gekennzeichnet, dass** die Heizungsarmatur eine motorbetriebene, einlasseitige Absperrung umfasst, welche von einer Absperrsteuerung steuerbar ist.

7. Armaturenanordnung nach Anspruch 6, **dadurch gekennzeichnet, dass** Kommunikationseinrichtungen für die Kommunikation zwischen Absperrsteuerung und Steuer- und Auswerteeinrichtung an dem Behälter vorgesehen sind.

8. Armaturenanordnung nach einem der vorgehenden Ansprüche, **dadurch gekennzeichnet, dass** die Sensoren und/oder Messeinrichtungen eine Turbine oder einen anderen Strömungsmesser umfassen, der die durch den Behälter fließende Strömung erfasst.

9. Armaturenanordnung nach Anspruch 8, **dadurch gekennzeichnet, dass** eine einlassseitige Absperrung für Leckageschutz vorgesehen ist, welche von einer mit den Signalen des Strömungsmessers beaufschlagten Steuer- und Auswerteeinrichtung steuerbar ist.

10. Armaturenanordnung nach einem der vorgehenden Ansprüche, **dadurch gekennzeichnet, dass** die Schläuche, über welche die Heizungsarmatur mit dem Behälter verbunden sind, von einem Doppelschlauch gebildet sind, bei welche einer der Schläuche innerhalb eines anderen Schlauchs geführt ist.
